# EUROPÄISCHE PATENTSCHRIFT

(11) **EP 4 543 819 B1**
(45) Veröffentlichungstag und Bekanntmachung des Hinweises auf die Patenterteilung: **02.07.2025**
(21) Anmeldenummer: 24728531.5
(22) Anmeldetag: 21.05.2024
(51) Int. Cl.: C04B 7/36, C04B 20/02, C04B 7/44, C04B 20/10

(54) **VERFAHREN UND VORRICHTUNG ZUR EFFIZIENTEN REDUKTION VON KOHLENDIOXIDEMISSIONEN DURCH BINDUNG AN EINEN ALTBAUSTOFF**
METHOD AND DEVICE FOR EFFICIENTLY REDUCING CARBON DIOXIDE EMISSIONS THROUGH BINDING TO A WASTE BUILDING MATERIAL
PROCÉDÉ ET DISPOSITIF POUR RÉDUIRE EFFICACEMENT DES ÉMISSIONS DE DIOXYDE DE CARBONE PAR LIAISON À UN MATÉRIAU DE CONSTRUCTION DE RÉCUPÉRATION

(30) Priorität: 26.05.2023 DE 102023113943; 26.05.2023 LU 103132
(43) Veröffentlichungstag der Anmeldung: 30.04.2025
(73) Patentinhaber: thyssenkrupp Polysius GmbH, 59269 Beckum (DE); thyssenkrupp AG, 45143 Essen (DE)
(72) Erfinder: MAIER, Oliver, 48167 Münster (DE); RATZLAFF, Sergej, 59555 Lippstadt (DE); WILLMS, Eike, 44309 Dortmund (DE); BERGER, Claudia, 08393 Schönberg (DE)
(74) Vertreter: thyssenkrupp Intellectual Property GmbH
(86) Internationale Anmeldenummer: PCT/EP2024/063868
(87) Internationale Veröffentlichungsnummer: WO 2024/245804

(56) Entgegenhaltungen:
- EP-A1- 4 108 316
- WO-A1-2008/061305

## Beschreibung

Die Erfindung betrifft ein Verfahren, um mit Altbaustoffen, zum Beispiel Zementstein, Kohlendioxid sicher zu binden und somit eine Freisetzung zu verhindern und somit ein Baustein zur Klimaneutralität zu sein.

In zunehmendem Maße wird es notwendig, natürliche Ressourcen zu schonen und auf recyceltes Material zurückzugreifen. Ebenso sind die Emissionen von Kohlendioxid als Ursache für die globale Erwärmung kritisch. Daher wird zunehmend auf die Abtrennung von Kohlendioxid aus dem Abgas und dessen dauerhafte Speicherung oder Nutzung gesetzt. Eine mögliche Form ist die Einbringung als verflüssigtes Kohlendioxid zur unterirdischen Speicherung. Dieses Verfahren ist jedoch nicht unumstritten, da ein dauerhafter Verbleib nicht zwangsläufig garantiert ist und bei einem Entweichen damit der Treibhauseffekt wieder verstärkt werden würde, zumal für Abtrennung und Lagerung weitere Energie benötigt wird und damit potenziell wieder Kohlendioxid produziert wird.

Eine der Kohlendioxid-intensiven Industrien ist die Zementindustrie. Zum einen wird für den Prozess viel Energie benötigt, was bei den herkömmlichen fossilen Brennstoffen zu einer Kohlendioxid-Emission führt. Zum anderen wird aus dem Rohmaterial, beispielsweise Kalkstein, Kohlendioxid prozessbedingt freigesetzt.

Auf der anderen Seite fallen bei Abriss von Beton-Bauwerken große Mengen von Altbeton an. Daher wird derzeit diskutiert, Beton wiederaufzubereiten, um beispielsweise neuen Zement herzustellen. Hierbei ist jedoch problematisch, dass beispielsweise Sand und der abgebundene Zement schwer trennbar miteinander vermischt und verbunden sind. Die sandfreie oder wenigstens sandarme Komponente des Altbetons wird auch als Altzementstein bezeichnet. Es ist bekannt, dass Beton während der Lebensdauer Kohlendioxid aufnehmen kann, jedoch nur einen Bruchteil des bei der Herstellung aus dem Kalkstein freigesetzten Kohlendioxids. Nach langer Zeit, beispielsweise bei sehr alten Gebäuden, kann dieser Wert bei etwa 20 % bezogen auf den Calciumgehalt des Betons liegen, es wird also sehr langsam und damit über lange Zeiträume in etwa 1/5 des ursprünglich freigesetzten Kohlendioxids wieder aufgenommen.

Aus der WO 2020 / 058 247 A1 ist ein Verfahren und eine Anlage zum Aufbereiten von Material, das Zementstein enthält, bekannt.

Aus der EP 3 656 750 A2 ist die Verwendung von Kohlendioxid aus und für Zement bekannt.

Aus der nachveröffentlichten DE 10 2022 132 073 ist ein Verfahren und eine Vorrichtung zur effizienten Reduktion von Kohlendioxidemissionen bekannt.

Eine wesentliche Herausforderung bei der Abtrennung und sicheren Speicherung von Kohlendioxid ist es, keine neuen Emissionen zu schaffen und so letztendlich zu geringeren Kohlendioxidemissionen zu kommen. Ein bekanntes Verfahren ist beispielsweise als Carbonate Looping oder auch Calcium Looping bekannt. Hierbei wird Calciumoxid in einen Abgasstrom eingebracht, dort (partiell) zu Calciumcarbonat umgewandelt und in einem zweiten Prozess gebrannt, wodurch das Kohlendioxid wieder freigegeben und das Calciumoxid für den nächsten Kreislauf zur Verfügung steht. Hierdurch kann das Kohlendioxid selektiv aus einem Abgasstrom abgetrennt werden. Das Kohlendioxid ist dann zwar abgetrennt, aber noch nicht in einer sicheren Speicherung. Beispielsweise kann das Kohlendioxid dann in alte Erdgaslagerstätten verpresst werden. Aber sowohl das Brennen des Calciumcarbonats als auch das Verdichten und der Transport sowie letztendlich das Verpressen in einen Speicher sind energieaufwändig und erzeugen somit letztendlich eine neue potenzielle Emissionsquelle oder erhöhen wenigstens die zu speichernder Menge an Kohlendioxid.

Aus der EP 4 108 316 A1 ist ein Verfahren zur Entschwefelung und Decarbonatisierung eines Gases bekannt.

Aus der WO 2008 / 061 305 A1 ist ein integrierter chemischer Prozess bekannt.

Aufgabe der Erfindung ist es, ein sicheres und dauerhaftes Verfahren zur Abtrennung und Speicherung von Kohlendioxid bereitzustellen, ohne dabei einen aufwändigen, insbesondere energieaufwändigen Prozess zu benötigen, der selbst eine neue Emissionsquelle darstellt.

Gelöst wird diese Aufgabe durch eine Kohlendioxidabtrennungsanlage mit den in Anspruch 1 angegebenen Merkmalen sowie durch das Verfahren mit den in Anspruch 6 angegebenen Merkmalen. Vorteilhafte Weiterbildungen ergeben sich aus den Unteransprüchen, der nachfolgenden Beschreibung sowie den Zeichnungen.

Die erfindungsgemäße Kohlendioxidabtrennungsanlage weist eine Altbaustoffzuführung, eine Zerkleinerungsvorrichtung, eine Befeuchtungsvorrichtung und eine Umsetzungsvorrichtung auf. Die Altbaustoffzuführung ist mit der Zerkleinerungsvorrichtung zur Überführung von Altbaustoff verbunden. Die Zerkleinerungsvorrichtung ist mit der Befeuchtungsvorrichtung zur Überführung von zerkleinertem Altbaustoff verbunden. Die Befeuchtungsvorrichtung ist mit der Umsetzungsvorrichtung zur Überführung von befeuchtetem Altbaustoff verbunden. Der Feststoffstrom fließt also von der Zerkleinerungsvorrichtung über die Befeuchtungsvorrichtung zur Umsetzungsvorrichtung. Derartige oder ähnliche Anlagen sind aus dem Stand der Technik bekannt, beispielsweise aus der nachveröffentlichten DE 10 2022 132 073. Die chemische Umsetzung zwischen dem Altbaustoff und dem Kohlendioxid erfolgt dabei entweder in einem Schlammreaktor, einem Wirbelbettreaktor, einem Steigrohrreaktor oder einem Mischer. Alle diese Verfahren haben ihre Vorteile und Nachteile. Zum einen läuft die Reaktion nur in Gegenwart von Wasser ab, sodass aufgrund der notwendigen Feuchte beispielsweise Wirbelschichten oder pneumatische Förderung problematisch werden können und gleichzeitig durch die vergleichsweise starke Austrocknung auch weitere Probleme aufwerfen können. Daher wird erfindungsgemäß eine Umsetzungsvorrichtung verwendet, die die Nachteile aus dem Stand der Technik vermeidet.

Erfindungsgemäß ist die Umsetzungsvorrichtung ein Gegenstromreaktor. Der Feststoffstrom des Altbaustoffes wird also im Gegenstrom zum zu reinigenden Kohlendioxid-haltigen Gas geführt. Im Gegensatz dazu ist bei einem Steigrohrreaktor ein Gleichstrom gegeben, bei einem Wirbelbett eine Strömung in erster Näherung senkrecht zueinander. Daher weist die Umsetzungsvorrichtung an der Unterseite eine Gaszuführung für das zu reinigende Kohlendioxid-haltige Gas auf. Weiter weist die Umsetzungsvorrichtung an der Oberseite einen Gasauslass auf. Dadurch wird das zu reinigende Gas von der Unterseite zur Oberseite geführt. Dieses strömt somit zwangsweise von unten nach oben durch die konkrete Ausbildung der Umsetzungsvorrichtung. Die Umsetzungsvorrichtung weist an der Oberseite eine Feststoffzuführung und an der Unterseite einen Feststoffauslass auf. Somit wird durch diese Anordnung der zerkleinerte und befeuchtete Altbaustoff durch die Schwerkraft von der Feststoffzuführung zum Feststoffauslass in einem Schüttbett, bestehend aus zerkleinerten und befeuchteten Altbaustoff, und somit im Gegenstrom zum zu reinigenden Gas gefördert. Diese Anordnung und damit die durch die Vorrichtung vorgegebene Prozessführung sind für einen Altbaustoff im Gegensatz zu einem frisch thermisch aktivierten Calciumoxid vorteilhaft, da wie bereits ausgeführt Altbaustoff eben partiell bereits Kohlendioxid enthält. Zudem führt lediglich eine Zerkleinerung nur zu einer begrenzteren Oberfläche. Diese geringere Aktivität wird durch eine in einem Schüttbett übliche längere Verweilzeit kompensiert. Gleichzeitig ist ein Schüttbett gasdurchströmt, im Gegensatz zu einem Schlamm oder einer Emulsion. Dadurch entfallen langwierige Transportvorgänge in der flüssigen Phase, das zu reinigende Gas kommt in direkten und innigen Kontakt zum Altbaustoff. Somit unterscheidet sich beispielsweise die vorliegende Umsetzungsvorrichtung vorteilhaft von sogenannten Slurry-Reaktoren.

Die Feststoffzuführung ist mit der Befeuchtungsvorrichtung zur Überführung von befeuchtetem Altbaustoff verbunden. Die Umsetzungsvorrichtung weist an der Unterseite einen Feststoffauslass auf. Der Gasstrom wird durch diesen Aufbau in der Umsetzungsvorrichtung in erster Näherung von unten nach oben und der Feststoffstrom von oben nach unten geführt. Hierbei ist nicht nur eine senkrechte Anordnung, sondern auch eine schräge Anordnung möglich, wesentlich ist, dass die Schwerkraft die Förderung des Feststoffstromes sicherstellt. Durch diesen Aufbau wird in einfacher Weise eine einfache Prozessführung möglich, insbesondere können so sehr leicht größere Verweilzeiten ermöglicht werden. Beispielsweise und insbesondere weist die Umsetzungsvorrichtung ein Schüttbett auf. Der Altbaustoff füllt also den Innenraum der Umsetzungsvorrichtung größtenteils aus und liegt als eine Schüttung vor, welche durch den Auftrag von oben und die Entnahme von unten, vergleichsweise langsam durch die Umsetzungsvorrichtung wandert. Das Kohlendioxid-haltige Gas strömt in Gegenrichtung durch die Schüttung und hat dadurch Zeit zur Reaktion. Gleichzeitig wird dadurch eine schnellere Sättigung des Gasstromes mit Feuchtigkeit erreicht, sodass ein zu starkes Austrocknen, wie beispielsweise in einer Wirbelschicht, verhindert wird. Alternativ zu einem Schüttbett kann der Effekt auch durch ein langsames Durchrieseln des Feststoffstromes erreicht werden, was wiederum durch geeignete Einbauten innerhalb der Umsetzungsvorrichtung erreicht werden kann.

Durch diese geometrische Ausführung der Umsetzungsvorrichtung ist diese eben besonders geeignet zu Umsetzung von nur grob vorbehandeltem Altbaustoff, welcher eben nur zerkleinert und befeuchtet wurde und eben nicht insbesondere thermisch aktiviert wurde, sodass der Energiebedarf für den Gesamtprozess minimal gehalten wird. Zudem liegt das Kohlendioxid am Ende in einer gebundenen Form vor, die eine einfache Verwendung oder Deponierung erleichtert und eben nicht ein energieintensives Verpressen beispielsweise in tiefe Erdlagen erfordert. Somit werden auch in den Folgeprozessen Energie und damit potenzielle Emissionsquellen eingespart.

Ein weiterer Vorteil ist, dass die Umsetzungsvorrichtung eben auch leicht auf einen üblichen Altbaustoff ausgelegt werden kann, welcher eben beispielsweise Sand und andere inerte Komponenten enthält. Eine besonders aufwändige Abtrennung des Altzementsteins aus dem Altbaustoff kann somit vermieden werden, indem das Innenvolumen der Umsetzungsvorrichtung um den Volumenanteil der Inertmaterialien vergrößert ausgelegt wird.

Die Umsetzungsvorrichtung kann zur kontinuierlichen Förderung des Feststoffstromes oder für ein zyklisches Befüllen und Entleeren (Batch-Betrieb) ausgelegt sein. Hierbei kann der Batch-Betrieb auch partiell erfolgen, also nicht eine vollständige Entleerung, sondern eine Teilentnahme unten und eine Teilbefüllung von oben.

In einer weiteren Ausführungsform der Erfindung weist die Umsetzungsvorrichtung eine mechanische Ausbringvorrichtung auf. Die mechanische Ausbringvorrichtung kann beispielsweise eine Schnecke oder ein Räumgerät sein. Es kann sich aber auch um eine in den Boden integrierte mechanische Ausbringvorrichtung handeln, welche zum Beispiel auch bei der Einbringung und Förderung von Ersatzbrennstoffen in Brennöfen bekannt sind. Hierdurch wird eine seitliche Ausbringung am unteren Ende möglich und dennoch eine flächige Zuführung des Kohlendioxid-haltigen Gases nicht blockiert.

In einer weiteren Ausführungsform der Erfindung weist die Zerkleinerungsvorrichtung eine Mahlkörpermühle und einen Sichter auf. Alternativ kann die Zerkleinerungsvorrichtung auch eine Rollenmühle, eine Walzenmühle oder eine Schwingmühle aufweisen.

In einer weiteren Ausführungsform der Erfindung ist zwischen der Zerkleinerungsvorrichtung und der Befeuchtungsvorrichtung eine Speichervorrichtung angeordnet. Dieses kann ein einfacher Bunker sein und dient dazu, Stoffstromschwankungen auszugleichen.

In einer weiteren Ausführungsform der Erfindung weist die Umsetzungsvorrichtung einen Feuchtigkeitssensor und eine weitere Befeuchtungsvorrichtung auf. Beispielsweise auf halber Höhe kann der Feuchtigkeitssensor angeordnet sein, um den Feuchtegehalt des Feststoffstromes zu erfassen. Die Befeuchtungsvorrichtung kann hierbei ober- oder unterhalb des Feuchtigkeitssensors angeordnet sein. Hierdurch kann die Feuchte im Feststoffstrom innerhalb des Korridors von vorzugsweise 5 bis 25 Gew.-% gehalten werden. Natürlich können auch weitere Feuchtigkeitssensoren und Befeuchtungsvorrichtungen vorgesehen sein.

In einer weiteren Ausführungsform der Erfindung weist die Kohlendioxidabtrennungsanlage eine erste Umsetzungsvorrichtung und eine zweite Umsetzungsvorrichtung auf. Die Umsetzungsvorrichtung und die zweite Umsetzungsvorrichtung sind an der Unterseite gasführend verbunden. Die erste Umsetzungsvorrichtung und die zweite Umsetzungsvorrichtung werden alternierend zyklisch gefüllt und betrieben analog einem Gegenstrom-Regenerativ-Schachtofens (GGR-Schachtofen). Beide Umsetzungsvorrichtungen sind mit einer Schüttung aus Altbaustoff gefüllt. Beispielsweise wird die zweite Umsetzungsvorrichtung von oben nach unten mit Kohlendioxid-haltigem Gas durchströmt. In der zweiten Umsetzungsvorrichtung befindet sich Altbaustoff, welcher in einem vorhergehenden Zyklus bereits Kohlendioxid gebunden hat. In dieser Phase wird durch das Durchströmen der Altbaustoff getrocknet und gleichzeitig das Kohlendioxid-haltige Gas befeuchtet. Dadurch wird zum einen eine Trocknung des Altbaustoffs in der ersten Umsetzungsvorrichtung stark reduziert und gleichzeitig das Produkt getrocknet, sodass auf eine getrennte Trocknung verzichtet werden kann. Die erste Umsetzungsvorrichtung wird entsprechend von unten nach oben vom Kohlendioxid-haltigen Gas durchströmt und es findet so die Reaktion zwischen dem Altbaustoff und dem Kohlendioxid statt. Nach Abschluss des Zyklus wird die zweite Umsetzungsvorrichtung entleert durch Entnahme des Altbaustoffs an der Unterseite und gleichzeitig oder anschließend von oben erneut befüllt. Zusätzlich wird die Strömungsrichtung des Kohlendioxid-haltigen Gases umgedreht. Dieses strömt nun oben in die erste Umsetzungsvorrichtung und trocknet nun den in dem ersten Zyklus bereits mit Kohlendioxid umgesetzten Altbaustoff und strömt dann in der zweiten Umsetzungsvorrichtung von unten nach oben durch den frischen Altbaustoff und setzt diesen um. Somit wird immer eine Umsetzungsvorrichtung zum Trocknen des Produkts und Befeuchten des Gasstromes verwendet und die andere Umsetzungsvorrichtung zur eigentlichen Umsetzung.

In einem weiteren Aspekt betrifft die Erfindung ein Verfahren zur Bindung von Kohlendioxid an einen Altbaustoff. Das Verfahren weist die folgenden Schritte auf:
a) Bereitstellen eines Altbaustoffes,
b) Zerkleinern des Altbaustoffes auf eine maximale Partikelgröße von 1 mm,
c) Befeuchten des Altbaustoffes auf eine Feuchte von 5 bis 25 Gew.-%,
d) Einbringen des zerkleinerten und befeuchteten Altbaustoffes in eine Schüttung in einer Umsetzungsvorrichtung an der Oberseite der Umsetzungsvorrichtung,
e) Durchströmen der Umsetzungsvorrichtung mit einem Kohlendioxid-haltigem Gas von unten nach oben,
f) Entnehmen des carbonatisierten Altbaustoffes an der Unterseite der Umsetzungsvorrichtung.

Wesentlich ist, dass in Schritt d) und Schritt e) direkt der Altbaustoff umgesetzt wird. Der Altbaustoff ist lediglich in Schritt b) zerkleinert und in Schritt c) befeuchtet, sodass der Altbaustoff nur minimal vorbehandelt wird und eben nicht einen energieaufwändigen Aktivierungsprozess, beispielsweise eine thermische Aktivierung insbesondere unter Freisetzung von gebundenem Kohlendioxid, durchläuft.

Für das Verfahren wird bevorzugt die erfindungsgemäße Kohlendioxidabtrennungsanlage verwendet und die erfindungsgemäße Kohlendioxidabtrennungsanlage ist besonders gut für das erfindungsgemäße Verfahren geeignet.

Die Schritte a), b) und c) betreffen Vorbereitungsschritte.

Die Schritte d), e) und f) betreffen den eigentlichen und wesentlichen Umsetzungsprozess und dessen erfindungsgemäße Umsetzung. Die Schritte d), e) und f) können hierbei kontinuierlich oder diskontinuierlich durchgeführt werden.

Bevorzugt erfolgt eine kontinuierliche Durchführung, es wird also konstant Altbaustoff gemäß Schritt d) in die Umsetzungsvorrichtung eingebracht, in der Umsetzungsvorrichtung von Kohlendioxid-haltigem Gas gemäß Schritt e) von unten nach oben durchströmt und gemäß Schritt f) an der Unterseite wieder entnommen. Es liegt also beispielsweise eine kontinuierliche wandernde Schüttung vor.

Alternativ kann das Verfahren diskontinuierlich durchgeführt werden, wobei zunächst ein Befüllen der Umsetzungsvorrichtung in Schritt d) erfolgt, und nach einer Umsetzung in Schritt e) die Entnahme in Schritt f). Selbst in diesem Fall können die Schritte d) und f) zeitgleich durchgeführt werden.

Erfindungswesentlich ist eben, dass eine Einbringung des Feststoffstromes von oben und damit ein schwerkraftgetriebener Feststofftransport erfolgt und die Gasströmung im Gegenstrom erfolgt. Durch diese Anordnung lassen sich zum ersten die Verweilzeit in sehr guter und einfacher Weise leicht geeignet einstellen, zum zweiten stellt die Feuchtigkeit des Feststoffstromes kein Problem für den Stofftransport dar und zum dritten kann das Problem der Austrocknung minimiert werden.

Ein wesentlicher Punkt des Verfahrens ist, dass der Altbaustoff eben nicht thermisch oder in anderer energieintensiver Weise vorbehandelt, insbesondere aktiviert wird. Es wird lediglich eine Zerkleinerung und Befeuchtung durchgeführt.

In einer weiteren Ausführungsform der Erfindung wird die Umsetzung im Schritt e) bei 20 °C bis 80 °C durchgeführt. Bevorzugt wird die Umsetzung im Schritt e) bei 60 °C bis 80 °C durchgeführt.

In einer weiteren Ausführungsform der Erfindung wird die Verweilzeit zwischen Schritt d) und Schritt f) in der Umsetzungsvorrichtung für den Altbaustoff zwischen 30 s und 20 min gewählt. Bevorzugt wird die Verweilzeit zwischen Schritt d) und Schritt f) in der Umsetzungsvorrichtung für den Altbaustoff zwischen 2 min und 7 min gewählt.

In einer weiteren Ausführungsform der Erfindung wird zwischen Schritt d) und Schritt f) an wenigstens einer Position in der Umsetzungsvorrichtung der Feuchtigkeitsgehalt des Altbaustoffes bestimmt. Hierdurch kann ermittelt werden, ob der Altbaustoff noch die ausreichende Feuchte aufweist, insbesondere ob diese noch über 5 Gew.-%, bevorzugt über 10 Gew.-%, liegt.

In einer weiteren Ausführungsform der Erfindung erfolgt zwischen Schritt d) und Schritt f) an wenigstens einer Position in der Umsetzungsvorrichtung eine Befeuchtung des Altbaustoffes. Hierdurch kann eine Austrocknung durch den Gasstrom effizient kompensiert werden und auf eine zu hohe Anfangsfeuchte verzichtet werden, wodurch die Verklumpungsneigung reduziert werden kann.

Nachfolgend ist die erfindungsgemäße Kohlendioxidabtrennungsanlage anhand eines in den Zeichnungen dargestellten Ausführungsbeispiels näher erläutert.
Fig. 1 Kohlendioxidabtrennungsanlage
Fig. 2 Umsetzungsvorrichtung

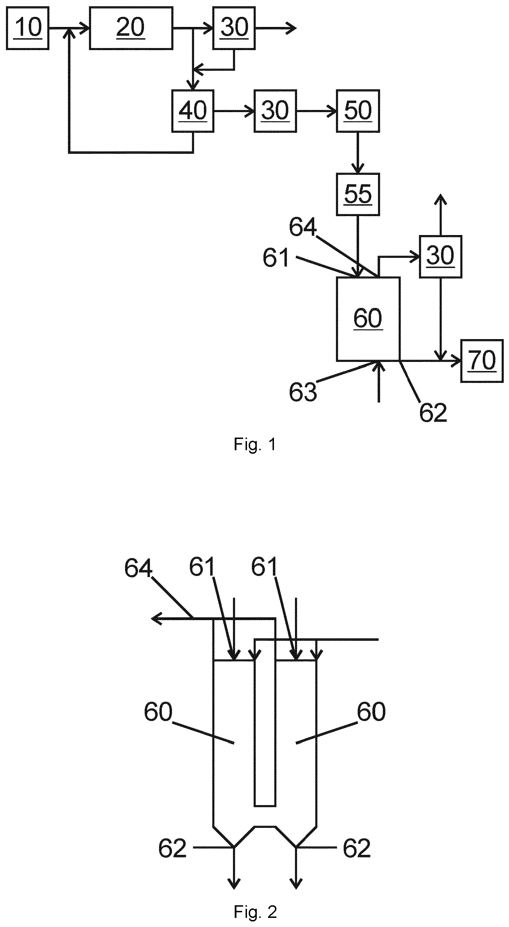

In Fig. 1 ist eine beispielhafte Kohlendioxidabtrennungsanlage gezeigt. In einem Altbaustofflager 10 wird Altbaustoff bereitgestellt. Insbesondere handelt es sich bei dem Altbaustoff um aufgearbeiteten Beton, welcher insbesondere auf eine maximale Partikelgröße von 60 mm gebrochen wird. Für dieses Verfahren wird dann nur die Fraktion mit einer Partikelgröße von weniger als 150 µm verwendet, da aufgrund der Brucheigenschaften des Betons in dieser Fraktion der Anteil an Zementstein besonders hoch und der Anteil an Siliziumdioxid besonders gering ist. Diese Fraktion des aufbereiteten Betons wird beispielsweise in dem Altbaustofflager 10 zur Verfügung gestellt.

Als Zerkleinerungsvorrichtung wird eine Mahlkörpermühle 20 mit anschließendem Sichter 40 eingesetzt. Die im Sichter 40 abgetrennte Grobfraktion wird der Mahlkörpermühle 20 wieder zugeführt. Die Feinfraktion des Sichters 40 wird in einem Staubabscheider 30 abgetrennt und in eine Speichervorrichtung 50 überführt. Das aus der Mahlkörpermühle 20 kommende Gas wird über einen Staubabscheider 30 geführt und der abgeschiedene Staub dem Stoffstrom des gemahlenen Altbaustoffes wieder zugeführt.

Aus der Speichervorrichtung 50 wird der Altbaustoff über eine Befeuchtungsvorrichtung 55 geführt und beispielsweise auf 15 Gew.-% Feuchte befeuchtet und anschließend über die Feststoffzuführung 61 in die Umsetzungsvorrichtung 60 eingebracht. Von unten wird in die Umsetzungsvorrichtung 60 über die Gaszuführung 63 Kohlendioxid-haltiges Gas zugeführt und durch den Altbaustoff im Gegenstrom geführt und anschließend durch den Gasauslass wieder abgegeben, welcher sich an der Oberseite der Umsetzungsvorrichtung 60 befindet. Um mitgeschleppten Altbaustoff abzuscheiden wird dieses Gas durch einen Staubabscheider geführt und das abgeschiedene Material dem Produkt zugeführt. Der Altbaustoff reagiert in der Umsetzungsvorrichtung 60 mit dem Kohlendioxid und wird entsprechend umgesetzt dann über den Feststoffauslass 62 an der Unterseite der Umsetzungsvorrichtung 60 entnommen und in das Produktlager 70 überführt. Um Das Produkt aus der Umsetzungsvorrichtung 60 zu entnehmen, weist die Umsetzungsvorrichtung 60 beispielsweise eine Schnecke als Ausbringvorrichtung auf.

Fig. 2 zeigt eine alternative Bauweise einer aus zwei Umsetzungsvorrichtungen 60 bestehenden Baugruppe. Beide Umsetzungsvorrichtungen 60 werden diskontinuierlich und wechselweise betrieben. Über die Feststoffzuführungen 61 werden die Umsetzungsvorrichtungen 60 mit Altbaustoff gefüllt. In einem ersten Zyklus wird beispielsweise das zu reinigende Kohlendioxidhaltige Gas zunächst oben in die rechte Umsetzungsvorrichtung 60 geleitet, nach unten geführt und über die Verbindung an der Unterseite in die linke Umsetzungsvorrichtung 60 geführt. Dort steigt das Gas im

Gegenstrom zum Altbaustoff auf und wird über den an der Oberseite angeordneten Gasauslass 64 wieder abgegeben. Nach dem Ende des Zyklus wird die rechte Umsetzungsvorrichtung 60 über den Feststoffauslass 62 entleert und über die Feststoffzuführung 61 wieder neu befüllt. Im folgenden nächsten Zyklusschritt wird dann die Gasrichtung umgedreht und das Gas zunächst in die linke Umsetzungsvorrichtung 60 eingeleitet, durchströmt diese von oben nach unten, wird an der Unterseite in die linke Umsetzungsvorrichtung 60 überführt und strömt dann nach oben und wird über den Gasauslass 64 abgegeben. Am Ende des zweiten Zyklusschritts wird dann die rechte Umsetzungsvorrichtung 60 über den Feststoffauslass 62 entleert und die Feststoffzuführung 61 neu befüllt. Danach beginnt wieder der erste Zyklusschritt.

### Bezugszeichen

- 10: Altbaustofflager
- 20: Mahlkörpermühle
- 30: Staubabscheider
- 40: Sichter
- 50: Speichervorrichtung
- 55: Befeuchtungsvorrichtung
- 60: Umsetzungsvorrichtung
- 61: Feststoffzuführung
- 62: Feststoffauslass
- 63: Gaszuführung
- 64: Gasauslass
- 70: Produktlager

## Patentansprüche

1. Kohlendioxidabtrennungsanlage, wobei die Kohlendioxidabtrennungsanlage eine Altbaustoffzuführung, eine Zerkleinerungsvorrichtung, eine Befeuchtungsvorrichtung (55) und eine Umsetzungsvorrichtung (60) aufweist, wobei die Altbaustoffzuführung mit der Zerkleinerungsvorrichtung zur Überführung von Altbaustoff verbunden ist, wobei die Zerkleinerungsvorrichtung mit der Befeuchtungsvorrichtung (55) zur Überführung von zerkleinertem Altbaustoff verbunden ist, wobei die Befeuchtungsvorrichtung (55) mit der Umsetzungsvorrichtung (60) zur Überführung von befeuchtetem Altbaustoff verbunden ist, **dadurch gekennzeichnet, dass** die Umsetzungsvorrichtung (60) ein Gegenstromreaktor ist, wobei die Umsetzungsvorrichtung (60) an der Unterseite eine Gaszuführung (63) für das zu reinigende Gas und an der Oberseite einen Gasauslass (64) aufweist, wodurch das zu reinigende Gas von der Unterseite zur Oberseite geführt wird, wobei die Umsetzungsvorrichtung (60) an der Oberseite eine Feststoffzuführung (61) und an der Unterseite einen Feststoffauslass (62) aufweist, sodass der zerkleinerte und befeuchtete Altbaustoff durch die Schwerkraft von der Feststoffzuführung (61) zum Feststoffauslass (62) in einem Schüttbett, bestehend aus zerkleinerten und befeuchteten Altbaustoff, und somit im Gegenstrom zum zu reinigenden Gas gefördert wird, wobei die Feststoffzuführung (61) mit der Befeuchtungsvorrichtung (55) zur Überführung von befeuchtetem Altbaustoff verbunden ist.

2. Kohlendioxidabtrennungsanlage nach Anspruch 1, **dadurch gekennzeichnet, dass** die Umsetzungsvorrichtung (60) eine mechanische Ausbringvorrichtung aufweist.

3. Kohlendioxidabtrennungsanlage nach einem der vorstehenden Ansprüche, **dadurch gekennzeichnet, dass** die Zerkleinerungsvorrichtung eine Mahlkörpermühle (20) und einen Sichter (40) aufweist.

4. Kohlendioxidabtrennungsanlage nach einem der vorstehenden Ansprüche, **dadurch gekennzeichnet, dass** zwischen der Zerkleinerungsvorrichtung und der Befeuchtungsvorrichtung (55) eine Speichervorrichtung (50) angeordnet ist.

5. Kohlendioxidabtrennungsanlage nach einem der vorstehenden Ansprüche, **dadurch gekennzeichnet, dass** die Umsetzungsvorrichtung (60) einen Feuchtigkeitssensor und eine weitere Befeuchtungsvorrichtung aufweist.

6. Verfahren zur Bindung von Kohlendioxid an einen Altbaustoff, wobei das Verfahren die folgenden Schritte aufweist:
a) Bereitstellen eines Altbaustoffes,
b) Zerkleinern des Altbaustoffes auf eine maximale Partikelgröße von 1 mm,
c) Befeuchten des Altbaustoffes auf eine Feuchte von 5 bis 25 Gew.-%,
d) Einbringen des zerkleinerten und befeuchteten Altbaustoffes in eine Schüttung in einer Umsetzungsvorrichtung (60) an der Oberseite der Umsetzungsvorrichtung (60),
e) Durchströmen der Umsetzungsvorrichtung (60) mit einem Kohlendioxid-haltigem Gas von unten nach oben,
f) Entnehmen des carbonatisierten Altbaustoffes an der Unterseite der Umsetzungsvorrichtung (60).

7. Verfahren nach Anspruch 6, **dadurch gekennzeichnet, dass** die Umsetzung im Schritt e) bei 5 °C bis 80 °C durchgeführt wird.

8. Verfahren nach einem der Ansprüche 6 bis 7, **dadurch gekennzeichnet, dass** die Verweilzeit zwischen Schritt d) und Schritt f) in der Umsetzungsvorrichtung (60) für den Altbaustoff zwischen 30 s und 20 min gewählt wird.

9. Verfahren nach einem der Ansprüche 6 bis 8, **dadurch gekennzeichnet, dass** zwischen Schritt d) und Schritt f) an wenigstens einer Position in der Umsetzungsvorrichtung (60) der Feuchtigkeitsgehalt des Altbaustoffes bestimmt wird.

10. Verfahren nach einem der Ansprüche 6 bis 9, **dadurch gekennzeichnet, dass** zwischen Schritt d) und Schritt f) an wenigstens einer Position in der Umsetzungsvorrichtung (60) eine Befeuchtung des Altbaustoffes erfolgt.

## Claims

1. Carbon dioxide separation plant, wherein the carbon dioxide separation plant comprises an old building material feed, a crushing device, a moistening device (55) and a conversion device (60), wherein the old building material feed is connected to the crushing device for the transfer of old building material, wherein the comminuting device is connected to the moistening device (55) for transferring comminuted old building material, wherein the moistening device (55) is connected to the conversion device (60) for transferring moistened old building material, **characterized in that** the conversion device 60) is a countercurrent reactor, the conversion device (60) having a gas feed (63) for the gas to be purified on the underside and a gas outlet (64) on the upper side, as a result of which the gas to be purified is guided from the underside to the upper side, the conversion device (60) having a solids feed (61) on the upper side and a solids outlet (62) on the underside, so that the comminuted and moistened old building material is conveyed by gravity from the solids feed (61) to the solids outlet (62) in a bed of debris, consisting of comminuted and moistened old building material, and thus in countercurrent to the gas to be cleaned, the solids feed (61) being connected to the moistening device (55) for transferring moistened old building material.

2. Carbon dioxide separation plant according to claim 1, **characterized in that** the conversion device (60) comprises a mechanical discharge device.

3. Carbon dioxide separation plant according to one of the preceding claims, **characterized in that** the comminution device comprises a grinding media mill (20) and a classifier (40).

4. Carbon dioxide separation plant according to one of the preceding claims, **characterized in that** a storage device (50) is arranged between the comminution device and the humidification device (55).

5. Carbon dioxide separation plant according to one of the preceding claims, **characterized in that** the conversion device (60) has a humidity sensor and a further humidification device.

6. A method of binding carbon dioxide to an old building material, the method comprising the following steps:
a) Provision of an old building material,
b) Crushing of the old building material to a maximum particle size of 1 mm,
c) Moisten the old building material to a moisture content of 5 to 25% by weight,
d) Introduction of the crushed and moistened old building material into a bed in a conversion device (60) at the top of the conversion device (60),
e) Flow of a carbon dioxide-containing gas through the conversion device (60) from bottom to top,
f) Removal of the carbonated waste material from the underside of the conversion device (60).

7. Process according to claim 6, **characterized in that** the reaction in step e) is carried out at 5 °C to 80 °C.

8. Method according to one of claims 6 to 7, **characterized in that** the dwell time between step d) and step f) in the conversion device (60) is selected to be between 30 s and 20 min for the old building material.

9. Method according to one of claims 6 to 8, **characterized in that** between step d) and step f) the moisture content of the old building material is determined at at least one position in the conversion device (60).

10. Method according to one of claims 6 to 9, **characterized in that** between step d) and step f), the old building material is moistened at at least one position in the conversion device (60).

## Revendications

1. Installation de séparation de dioxyde de carbone, dans laquelle l'installation de séparation de dioxyde de carbone comprend une alimentation en matériaux de récupération, un dispositif de broyage, un dispositif d'humidification (55) et un dispositif de conversion (60), l'alimentation en matériaux de récupération étant reliée au dispositif de broyage pour le transfert de matériaux de récupération, le dispositif de broyage étant relié au dispositif d'humidification (55) pour le transfert de matériau de construction usagé broyé, le dispositif d'humidification (55) étant relié au dispositif de conversion (60) pour le transfert de matériau de construction usagé humidifié, **caractérisé en ce que** le dispositif de conversion (60) est un réacteur à contre-courant, le dispositif de conversion (60) présentant sur le côté inférieur une alimentation en gaz (63) pour le gaz à purifier et sur le côté supérieur une sortie de gaz (64), grâce à quoi le gaz à purifier est guidé du côté inférieur vers le côté supérieur, le dispositif de conversion (60) présentant sur le côté supérieur une alimentation en matières solides (61) et sur le côté inférieur une sortie de matières solides (62), de sorte que le matériau de construction usagé broyé et humidifié est transporté par gravité de l'alimentation en matières solides (61) à la sortie de matières solides (62) dans un lit en vrac constitué de matériau de construction usagé broyé et humidifié, et donc à contre-courant du gaz à purifier, l'alimentation en matières solides (61) étant reliée au dispositif d'humidification (55) pour le transfert du matériau de construction usagé humidifié.

2. Installation de séparation du dioxyde de carbone selon la revendication 1, **caractérisée en ce que** le dispositif de conversion (60) comprend un dispositif d'extraction mécanique.

3. Installation de séparation du dioxyde de carbone selon l'une quelconque des revendications précédentes, **caractérisée en ce que** le dispositif de broyage comprend un broyeur à corps de broyage (20) et un séparateur (40).

4. Installation de séparation du dioxyde de carbone selon l'une des revendications précédentes, **caractérisée en ce qu'un** dispositif de stockage (50) est disposé entre le dispositif de broyage et le dispositif d'humidification (55).

5. Installation de séparation du dioxyde de carbone selon l'une quelconque des revendications précédentes, **caractérisée en ce que** le dispositif de conversion (60) comprend un capteur d'humidité et un autre dispositif d'humidification.

6. Procédé de fixation de dioxyde de carbone à un matériau de construction ancien, le procédé comprenant les étapes suivantes :
a) Mise à disposition d'un matériau de construction ancien,
b) Broyage du matériau de construction usagé jusqu'à une taille maximale de particules de 1 mm,
c) Humidification du matériau de construction ancien jusqu'à une humidité de 5 à 25 % en poids,
d) l'introduction du matériau de construction ancien broyé et humidifié dans une masse en vrac dans un dispositif de conversion (60) sur le côté supérieur du dispositif de conversion (60),
e) le passage d'un gaz contenant du dioxyde de carbone à travers le dispositif de conversion (60) de bas en haut,
f) prélever le matériau de construction ancien carbonaté sur le côté inférieur du dispositif de conversion (60).

7. Procédé selon la revendication 6, **caractérisé en ce que** d la réaction dans l'étape e) est effectuée à une température de 5°C à 80°C.

8. Procédé selon l'une des revendications 6 à 7, **caractérisé en ce que** d le temps de séjour entre l'étape d) et l'étape f) dans le dispositif de conversion (60) est choisi entre 30 s et 20 min pour le matériau de construction ancien.

9. Procédé selon l'une des revendications 6 à 8, **caractérisé en ce que** entre l'étape d) et l'étape f), on détermine la teneur en humidité du matériau de construction ancien en au moins une position dans le dispositif de conversion (60).

10. Procédé selon l'une des revendications 6 à 9, **caractérisé en ce que** entre l'étape d) et l'étape f), une humidification du matériau de construction usagé est effectuée en au moins une position dans le dispositif de conversion (60).
